# EUROPÄISCHE PATENTANMELDUNG

(11) **EP 1 180 442 A2**
(43) Veröffentlichungstag der Anmeldung: **20.02.2002**
(21) Anmeldenummer: 01111396.6
(22) Anmeldetag: 10.05.2001
(51) Int. Cl.: B60G 17/033, B60G 17/056

(54) **Einrichtung zur Steuerung der Durchflussmengen an Druckflüssigkeit in einer Zuleitung für ein Fahrzeugaufhängungssystem**

(30) Priorität: 12.08.2000 DE 10052888
(71) Anmelder: Carl Freudenberg KG, 69469 Weinheim (DE)
(72) Erfinder: Brandenburger, Walter, 41470 Neuss (DE)

(57) **Zusammenfassung**

Einrichtung zur Steuerung der Durchflussmenge an Druckflüssigkeit in einer Zuleitung für die Zylinderräume von Federzylindern an Fahrzeugen mit permanent gefederter und über Niveaureglereinrichtung höhengeregelter Achse, insbesondere an Schleppern, wobei in die Zuleitung eine Drossel zur Begrenzung der Durchflussmenge der Druckflüssigkeit eingefügt ist, wobei die Zuleitung (2) mit einer die Drossel (4) umgehenden Bypass-Leitung (15) versehen ist, in die eine von einem Steuergerät (17) mit Höhensensor gesteuerte Zusatzdrossel (16) eingefügt ist, die bei Erreichen der Endanschläge der Fahrzeugachse nach starkem statischen Lastwechsel zugeschaltet wird und eine größere Durchflussmenge der Druckflüssigkeit zulässt.

## Beschreibung

### Technisches Gebiet

Die vorliegende Erfindung betrifft eine Einrichtung zur Steuerung der Durchflussmenge an Druckflüssigkeit in einer Zuleitung zu den Zylinderräumen von Federzylindern an Fahrzeugen mit permanent gefederter und über Niveauregeleinrichtung höhengeregelter Achse, insbesondere an Schleppern, wobei in die Zuleitung eine Drossel zur Begrenzung der Durchflussmenge der Druckflüssigkeit eingefügt ist.

### Stand der Technik

Durch die DE-PS 42 42 448 ist eine hydropneumatische Federungseinrichtung für Fahrzeuge mit hohen Lastverhältnissen und einer Load-Sensing-Pumpe als Druckversorgung bekannt, bei der statische Belastungsänderungen durch Auf- oder Abregelvorgänge ausgeregelt werden. Die dynamische Lageänderung wird mit Hilfe elektrischer Sensoren gemessen und als gemitteltes Signal an die Niveauregeleinrichtung geleitet.

Zur Abstimmung der Regelgeschwindigkeit ist in die Zuleitung zu dem Zylinderfederkreis eine in beiden Richtungen durchströmbare Drossel eingebaut. Diese Drossel ist jedoch bei starken Laständerungen für eine schnelle Druckanpassung im Federspeicher hinderlich.

Eine Verbesserung wird durch die in der DE 197 19 075 A1 beschriebene Einrichtung erreicht, die beim Abregeln unabhängig vom unterschiedlichen statischen Druckniveau einen im Wesentlichen gleichen Volumenstrom und damit in gleicher Zeit den Abregelvorgang ermöglicht. Diese Lösung erlaubt den Einsatz einer größeren Regeldüse, die bei niedrigeren Achslasten höhere Regelmengen zulässt und somit Anpasszeiten verkürzt. Wenn bei besonders hohen Laständerungen die Fahrzeugachse die Endanschläge erreicht, ist diese Massnahme nicht ausreichend.

### Darstellung der Erfindung

Der Erfindung liegt deshalb die Aufgabe zugrunde, ein Federungskonzept zu schaffen, dass bei Laständerungen bis in die Endanschläge Anpasszeiten kurz hält. Dieses ist insbesondere bei einer komfortablen weichen Federungsauslegung erforderlich. Es wird eine insgesamt weiche Federung angestrebt.

Die Lösung der gestellten Aufgabe wird bei einer Einrichtung der eingangs genannten Art erfindungsgemäß dadurch erreicht, dass die Zuleitung mit einer die Drossel umgehenden Bypass-Leitung versehen ist, in die eine von einem Steuergerät über Höhensensor gesteuerte Zusatzdrossel eingefügt ist, die bei Erreichen der Endanschläge der Fahrzeugachse nach starkem statischen Lastwechsel zugeschaltet wird und somit eine größere Durchflussmenge der Druckflüssigkeit zulässt. Durch diese Maßnahme werden Anpasszeiten beim Federspeicher verkürzt. Über die Bypass-Leitung wird eine schnelle und kurzfristige Druckanpassung herbeigeführt. Sobald die Druckanpassung erfolgt ist und die Fahrzeugachse sich geringfügig von Ihren Endanschlägen entfernt hat, wird die Zusatzdrossel wieder geschlossen und der weitere Regelvorgang kann, beispielsweise in der nach der DE 197 19 075 vorgegebenen Weise weitergeführt werde. Die Niveauregeleinrichtung kann so eingestellt werden, dass sie die Zusatzdrossel wegschaltet, sobald die Fahrzeugachse sich wenigstens zwei Millimeter von ihren Endanschlägen entfernt hat. Auf diese Weise können die Federspeicher beschleunigt auf den erforderlichen Lastdruck gefüllt bzw. entleert werden.

### Ausführung der Erfindung

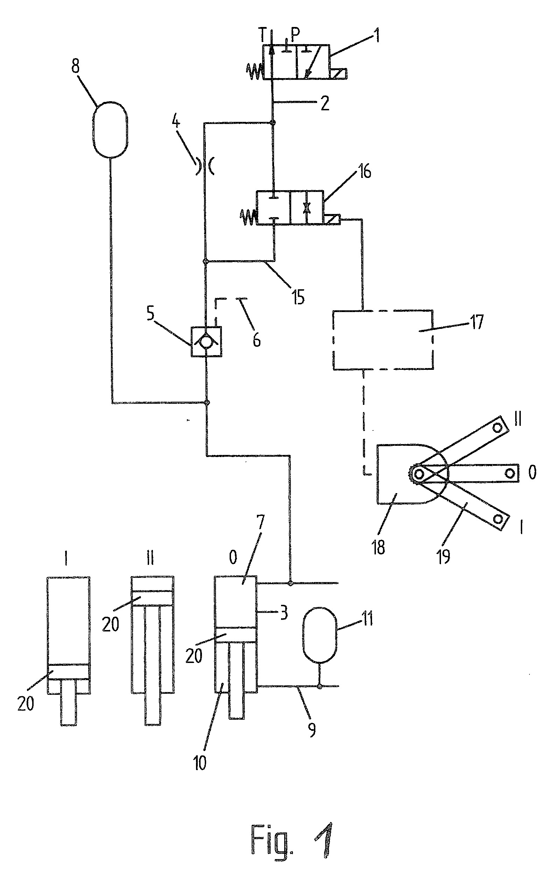

Anhand des in der Figur gezeigten Ausführungsbeispieles wird die Erfindung nachstehend näher erläutert:

In der Figur ist ein vereinfachter Schaltplan gezeigt, der alle mit der neuen Einrichtung in Verbindung stehenden Teile enthält. Diese Einrichtung kann im übrigen in einen üblichen Schaltplan zur Gesamtregelung eingefügt werden. Das für die Aufregelfunktion anzusteuernde Ventil 1 ist zwischen einer nicht näher dargestellten Pumpe und der hydraulischen Zuleitung 2 zum Federzylinder 3 eingefügt. In der Zuleitung 2 befindet sich in bekannter Weise die Festdrossel 4, welche die Durchflussmenge in beiden Richtungen begrenzt. Außerdem befindet sich in der Zuleitung 2 das entsperrbare Rückschlagventil 5, an welches die Steuerleitung 6 angeschlossen ist. Die Zuleitung 2 führt schließlich zum Zylinderraum 7 des Federzylinders 3 und gleichzeitig auch zu dem Zylinderraum des nicht näher gezeigten zweiten Federzylinders. Angeschlossen an die Zuleitung 2 ist auch der Hydrospeicher 8, der die Funktion eines Federgliedes hat. Über eine weitere Zuleitung 9 sind die Ringräume 10 der Federzylinder 3 miteinander verbunden. Hier ist der Hydrospeicher 11 als Federglied angeschlossen. Die Steuerleitung 6 führt zum entsperrbaren Rückschlagventil 5, die bei Abregelfunktion zur Entsperrung mit Drucköl beaufschlagt werden muß. Der Druck im Ringraum 10 wird allgemein durch gesonderte Regeleinrichtung konstant gehalten.

Im Bereich der Drossel 4 ist die Zuleitung 2 mit einer Bypassleitung 15 versehen, in welche die Zusatzdrossel 16 eingefügt ist. Die Zusatzdrossel 16 wird von dem Steuergerät 17 in Abhängigkeit von der Fahrzeugachslage gesteuert. Mit 18 ist symbolisch ein elektrischer Höhensensor eingezeichnet, an dessen Hebel 19 die Fahrzeugachse über ein Gestänge angebunden ist. Mit 0 sowie I und II ist die Mittellage bzw. die Endlagen der Fahrzeugachse bezeichnet. Auf der linken Seite der Figur ist die zugehörige Stellung der Kolben 20 angegeben. In der Stellung 0 befindet sich die Achse in ihrer Niveaulage und der Kolben 20 in der Mitte des Federzylinders 3. Die Zusatzdrossel 16 ist wie eingezeichnet geschlossen geschaltet. Bei geschlossenem Rückschlagventil 5 federt die Fahrzeugachse über die Federzylinder 3 im Verbund mit den Hydrospeichern 8 und 11. Sobald die statische Belastung sich soweit ändert, dass die Endanschläge der Fahrzeugachsen erreicht werden, so dass die Lagen I oder II erreicht sind, wird dieses dem Höhenregler 18 über den Hebel 19 übertragen und als Signal dem Steuergerät 17 mitgeteilt.

Bei starker Achsentlastung, insbesondere beim Anheben von schweren Heckanbaugeräten, wird die Achse vom Drucküberschuss des Federspeichers 8 in die Ausfederanschläge gedrückt und der Hebel 19 nimmt die Stellung 1 ein. Bei der darauffolgenden Abregelfunktion wird die Druckleitung 6 über den nicht dargestellten Steuerblock mit Druck beaufschlagt, so dass über das entsperrte Rückschlagventil 5 Drucköl aus dem Federspeicher 8 abfliessen kann. In Stellung 1 am Hebel 19 wird das Steuergerät 17 durch das Signal des Höhensensors 18 aktiviert, die Drossel 16 zuzuschalten, damit beschleunigt Drucköl aus dem Zylinderfederkreis entweichen kann, um möglichst schnell die Achslage ändern zu können.

Bei starker Zunahme der Achslast lieg die Achse wegen zu geringem Drucköl an den Einfederanschlägen und der Hebel 19 nimmt die Stellung II ein, so dass, durch den Höhensensor 18 aktiviert, das Steuergerät 17 die Drossel 16 zuschaltet und beim Aufregelvorgang durch Schalten von Ventil 1 und Entsperren von Rückschlagventil 5, die Federspeicher 8 schnell auf das notwendige Druckniveau gefüllt weren, um die Achse ohne lange Verzögerung von den Anschlägen bewegen zu können.

Nach kurzem Hub von den Anschlägen wird die Drossel 16 wieder weggeschaltet, damit die Achse mit der durch die Festdrossel 4 bestimten Regelgeschwindigkeit, damit die achse mit derdurch die Festdrossel 4 bestimmten Regelgeschwindigkeit in das Sollniveau einregelt.

## Patentansprüche

1. Einrichtung zur Steuerung der Durchflussmenge an Druckflüssigkeit in einer Zuleitung für die Zylinderräume von Federzylindern an Fahrzeugen mit permanent gefederter und über Niveaureglereinrichtung höhengeregelter Achse, insbesondere an Schleppern, wobei in die Zuleitung eine Drossel zur Begrenzung der Durchflussmenge der Druckflüssigkeit eingefügt ist, **dadurch gekennzeichnet, dass** die Zuleitung (2) mit einer die Drossel (4) umgehenden Bypass-Leitung (15) versehen ist, in die eine von einem Steuergerät (17) mit Höhensensor gesteuerte Zusatzdrossel (16) eingefügt ist, die bei Erreichen der Endanschläge der Fahrzeugachse nach starkem statischen Lastwechsel zugeschaltet wird und eine größere Durchflussmenge der Druckflüssigkeit zulässt.

2. Steuerungseinrichtung nach Anspruch 1, **dadurch gekennzeichnet, dass** die Zusatzdrossel (16) wieder weggeschaltet wird, nachdem die Fahrzeugachse sich wenigstens 2 mm von ihren Endanschlägen entfernt hat.
